# EUROPÄISCHE PATENTSCHRIFT

(11) **EP 0 440 838 B1**
(45) Veröffentlichungstag und Bekanntmachung des Hinweises auf die Patenterteilung: **14.04.1993**
(21) Anmeldenummer: 90102255.8
(22) Anmeldetag: 06.02.1990
(51) Int. Cl.: C08F 6/26, C08F 10/02

(54) **Verfahren zur Abtrennung flüchtiger Bestandteile aus durch Hochdruckpolymerisation erhaltenen Reaktionsgemischen**
Process for separating volatile materials from reaction mixtures obtained by high-pressure polymerization
Procédé de séparation de matières volatiles de mélanges réactionnels obtenus par polymérisation à haute pression

(43) Veröffentlichungstag der Anmeldung: 14.08.1991
(73) Patentinhaber: HOECHST AKTIENGESELLSCHAFT, 65926 Frankfurt am Main (DE)
(72) Erfinder: Beckemeier, Heinz, Dipl.-Ing., D-4200 Oberhausen 11 (DE); Bühnen, Heinz-Dieter, Dipl.-Ing., D-4200 Oberhausen 12 (DE); Mercamp, Herbert, D-4220 Dinslaken (DE); Zoller, Wilhelm, Dr.Dipl.-Chem., D-4200 Oberhausen 11 (DE)

(56) Entgegenhaltungen:
- EP-A- 0 341 540
- FR-A- 2 099 267
- DATABASE WPI, Nr. 78-63578A, Derwent Publications Ltd, London, GB; & DD-A-131 824 (VEB LEUNA-WERK)
- Hawley's Condensed Chemical Dictionary, 11th Edition, Seite 318 - 319

## Beschreibung

Die Erfindung betrifft ein Verfahren zur Abtrennung flüchtiger Bestandteile aus Polymerschmelzen, die bei der Polymerisation von Ethylen und der Copolymerisation von Ethylen mit anderen copolymerisierbaren Verbindungen unter hohem Druck erhalten werden.

Die radikalische Hochdruckpolymerisation von Ethylen allein oder zusammen mit Comonomeren wird großtechnisch in Rohrreaktoren oder in Rührautoklaven bei Drücken von 50 bis 400 MPa, insbesondere 140 bis 250 MPa und Temperaturen von 100 bis 400°C durchgeführt.

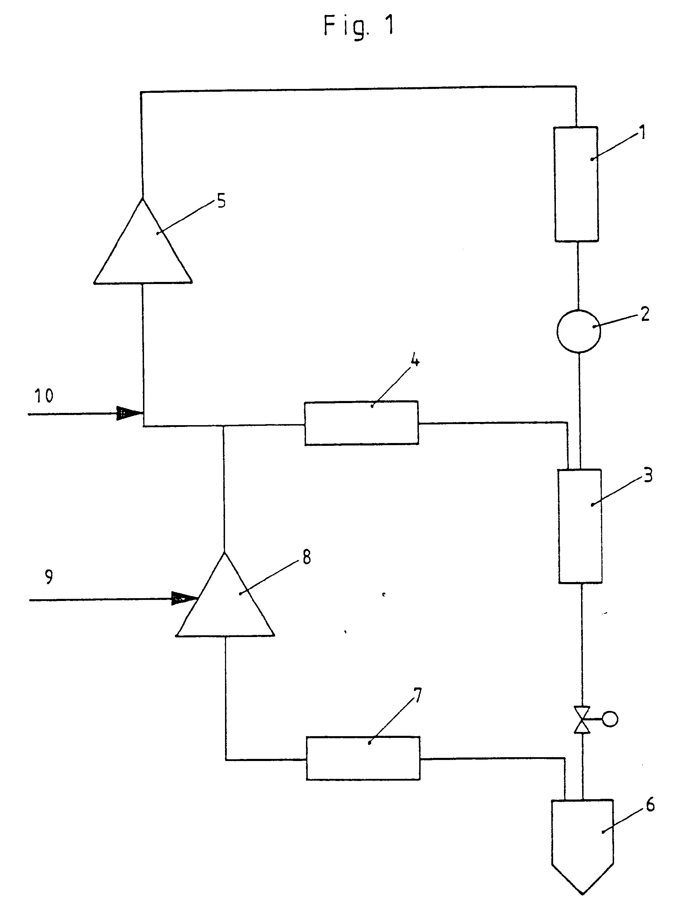

In Figur 1 ist der Prozeß schematisch dargestellt. Frischethylen wird über eine Leitung 9 zunächst einem Niederdruckkompressor 8 zugeführt, auf 10 bis 35 MPa verdichtet und dann zusammen mit dem in der Polymerisationsstufe nicht umgesetzten und im Kreislauf zurückgeführten Ethylen in einem Hochdruckkompressor 5 auf Reaktionsdruck gebracht. Die in Lösung vorliegenden Initiatoren werden mit geeigneten Fördereinrichtungen, z.B. Kolbenpumpen, dem komprimierten Ethylen zugemischt oder direkt in den Reaktor eindosiert. Comonomere wie Vinylester, olefinisch ungesättigte Carbonsäuren oder alpha-Olefine führt man über eine Einspeiseleitung 10 ebenfalls dem Hochdruckkompressor 5 zu. In einem Reaktor 1 werden bei einmaligem Durchgang zwischen 10 und 45 Gew.-% der eintretenden Monomeren umgesetzt. Zur Abscheidung des Polymerisats wird das Gemisch gegebenenfalls nach vorheriger Kühlung in einem Kühler 2, in einem Hochdruckabscheider 3 auf 5 bis 50, bevorzugt 10 bis 35 MPa entspannt, wobei gasförmige Anteile über ein Hochdruck-Rückgassystem 4 in den Hochdruckkompressor 5 zurückgeführt werden. Das Polymerisat, das noch nicht umgesetzte Monomere gelöst enthält, wird über ein System aus Niederdruckabscheider 6 und Niederdruckkühler 7 entspannt. Die dabei freigesetzten niedermolekularen Verbindungen werden über den Niederdruckkompressor 8 in den Hochdruckkompressor 5 zurückgeführt. Das in dem Niederdruckabscheider 6 abgeschiedene Polymerisat enthält außer Restmengen Ethylen und Comonomeren auch Oligomere.

Auch bei sorgfältiger Trennung der Polymerisationsprodukte läßt es sich nicht vermeiden, daß die Polymerisate flüchtige Beimischungen wie Comonomere und deren Zersetzungsprodukte und weitere niedermolekulare Verbindungen zurückhalten. Diese Rückstände führen bei Lagerung und Verarbeitung der Polymerisate zu unerwünschten Emissionen und Geruchsbelästigungen, überdies wird ihr Flammpunkt deutlich herabgesetzt. Man ist daher bestrebt, durch geeignete Maßnahmen während des Entspannungsvorganges und durch zusätzliche Behandlung des Polymerisats sicherzustellen, daß die Produkte frei von flüchtigen Verbindungen sind.

Weitere Schwierigkeiten entstehen dadurch, daß das im Niederdruckabscheider freiwerdende Ethylen Comonomere, Oligomere und andere Verbindungen enthält, die bei der Rückführung des abgetrennten Ethylens auskondensieren, sich in Kompressoren und Pumpen ablagern und zu Verstopfungen führen können.

Nach einem in der DD-PS 131 824 beschriebenen Verfahren bringt man das Reaktionsgemisch nach dem Polymerisationsreaktor oder die Polymerschmelze nach Abtrennung des Hauptteiles des nicht umgesetzten Gasgemisches in einer Druckstufe intensiv mit Ethylen in Kontakt und trennt das Gemisch darauf in einer Beruhigungsstrecke. Nach einer zweckmäßigen Ausgestaltung dieses Verfahrens wird das Reaktionsgemisch in ein sich erweiterndes Rohr bei gleichzeitiger Einspeisung von Ethylen im Gleichstrom eingeleitet und das entstehende Gemisch im Niederdruckabscheider getrennt.

Eine andere, in der DE-AS 21 31 145 offenbarte Arbeitsweise zur Hochdruckpolymerisation von Ethylen vermischt die aus der Reaktionszone kommende Reaktionsmischung mit der frischen Ethylenbeschickung und dem Ethylen, das aus dem Niederdruckabscheider stammt und zurückgeführt wird.

Beide Verfahren führen nur zu einer geringen Verminderung der Konzentration niedermolekularer Beimischungen im Polymerisat. Sie erfordern überdies zu ihrer Durchführung zusätzliche Apparate.

Es ist weiterhin bekannt, das vom Niederdruckabscheider herrührende, nicht umgesetzte Gas mit Hilfe eines Injektors in den Hochdruckkreislauf zurückzuführen (vgl. DD-PS 202 882). Dieses Verfahren reduziert jedoch nicht die Konzentration der im Produkt verbleibenden niedermolekularen Bestandteile.

Bei flüssigen Produkten kann die Abtrennung niedermolekularer Verbindungen über eine Gaswäsche mit Stickstoff oder anderen inerten gasförmigen Stoffen erfolgen. Auch für dieses Verfahren sind jedoch zusätzliche Apparaturen erforderlich und die abgetrennten Bestandteile können nicht ohne Reinigung zurückgeführt werden.

Es bestand daher die Aufgabe, ein Verfahren zu entwickeln, das die aufgezeigten Nachteile vermeidet, eine weitgehende Entfernung der flüchtigen Anteile aus Polymerisatschmelzen gewährleistet und sicherstellt, daß im Kreisgas der Niederdruckstufe keine oder nur geringe Mengen auskondensierter Bestandteile enthalten sind.

Die Erfindung besteht in einem Verfahren zur Abtrennung flüchtiger Bestandteile aus den bei der Homopolymerisation von Ethylen oder der Copolymerisation von Ethylen mit anderen copolymerisierbaren Verbindungen bei erhöhten Drücken und erhöhten Temperaturen anfallenden Polymerisatschmelzen. Es ist dadurch gekennzeichnet, daß man im Hochdruckpolymerisationsabscheider der Hochdruckpolymerisationsanlage nach Entfernen des Hauptanteils des nichtumgesetzten Gasgemisches durch Herabsetzen des Druckes auf 5 bis 70 MPa bei einer Temperatur in der Schmelze von mindestens etwa 120° Ethylen im Gegenstrom durch die Schmelze leitet.

Überraschenderweise gelingt es, mit Hilfe des neuen Verfahrens flüchtige Bestandteile, die in den bei der Polymerisation unter hohem Druck anfallenden Polymerisatschmelzen enthalten sind, nahezu vollständig zu entfernen. Eine weitere Reinigung z.B. im Extruder oder bei der Lagerung des Produktes ist nicht erforderlich. Die Konzentration der niedermolekularen Bestandteile im rückgeführten Ethylen wird soweit herabgesetzt, daß bei dessen Kompression Kondensationsprodukte nicht anfallen und Produktverluste vermieden werden.

Die erfindungsgemäße Arbeitsweise kann bei den verschiedenen Ausführungsformen der Polymerisation und Copolymerisation von Ethylen nach dem Hochdruckverfahren, in Rohrreaktoren ebenso wie in Autoklaven, durchgeführt werden. Sie ist sowohl bei Prozessen, die mit Lösungsmitteln arbeiten, als auch bei lösungsmittelfreien Prozessen anwendbar und ebenso bei Verfahren zur Herstellung von linearen Polyethylenen niedriger Dichte (LLDPE).

Unter flüchtigen Bestandteilen, die in Polymerisatschmelzen enthalten sind, werden niedermolekulare Verbindungen verstanden, die z.B. als Comonomere, Zersetzungsprodukte von Comonomeren und Oligomere in den Polymerisationsprodukten enthalten sind. So findet sich z.B. bei der Herstellung von Copolymerisaten aus Ethylen und Vinylacetat Essigsäure in den Produkten, die durch Zersetzung von Vinylacetat entstanden ist. Ferner gehören zu den flüchtigen Verbindungen Lösungsmittel, die z.B. mit Initiatoren und Molmassenreglern in das Reaktionsgemisch gelangen. Auch Schmierstoffe und andere Hilfsmittel, die für den Betrieb der Polymerisationsanlage erforderlich sind, treten in der Polymerisatschmelze auf.

Die Behandlung der Polymerisatschmelze nach dem erfindungsgemäßen Verfahren erfolgt bei erhöhtem Druck bei 5 bis 70 MPa, vorzugsweise bei 10 bis 40 MPa. Es ist nicht erforderlich, für die Behandlung einen eigenen Reaktor vorzusehen. Sie wird im Hochdruckpolymerisatabscheider einer Hochdruckpolymerisationsanlage durchgeführt. Dabei wird zunächst der Hauptanteil des nicht umgesetzten Gasgemisches durch Herabsetzung des Druckes auf den vorstehend genannten Bereich entfernt und erst dann die Schmelze mit Ethylen in Kontakt gebracht.

Um sicherzustellen, daß die Abtrennung der flüchtigen Bestandteile aus der Schmelze vollständig oder zumindest annähernd vollständig erfolgt, ist es erforderlich, in der Schmelze eine Temperatur von mindestens etwa 120°C aufrechtzuerhalten. Besonders bewährt hat es sich, die Behandlung mit Ethylen bei Temperaturen oberhalb etwa 150°C vorzunehmen. Es hat sich gezeigt, daß die Abtrennung der flüchtigen Stoffe um so vollständiger ist, je höher die Temperatur der Schmelze ist. Eine obere Grenze für die Behandlungstemperatur ist lediglich durch die Temperatur gegeben, mit der die Schmelze aus dem Polymerisationsraum in den Reaktor gelangt, in dem die Abtrennung der flüchtigen Stoffe erfolgt. Um eine möglichst hohe Temperatur in der Schmelze zu gewährleisten ist es daher zweckmäßig, der Schmelze erhitztes Ethylen entgegenzuleiten.

Im Rahmen der beanspruchten Arbeitsweise ist es sehr wesentlich, daß Ethylen und Schmelze beim Aufeinandertreffen entgegengesetzte Fließrichtung haben. Dadurch wird eine sehr innige Vermischung von Schmelze und Olefin erreicht.

Die Wirksamkeit des Ethylenstromes kann dadurch weiter erhöht werden, daß man ihn im Reaktor, in dem die Behandlung der Schmelze erfolgt, zwangsweise umlenkt. Auf diese Weise wird ein mehrfaches Durchströmen des abgeschiedenen Produktes mit frischem Ethylen sichergestellt. Man erreicht das Umlenken des Ethylens durch geeignete Einbauten im Reaktor, im einfachsten Fall durch Platten, die auf gegenüberliegenden Seiten und gegeneinander versetzt angeordnet sind.

Die zur Behandlung der Polymerisatschmelze benotigte Ethylenmenge hängt von der Temperatur, der Viskosität und dem Comonomerengehalt der Schmelze ab. Die erforderliche Ethylenmenge steigt mit der Viskosität und dem Comonomerengehalt an und nimmt mit zunehmender Temperatur ab. Im allgemeinen setzt man 0,1 bis 2 Gew.-Teile Ethylen je Gew.-Teile Schmelze ein.

Zur Abtrennung der flüchtigen Bestandteile aus der Schmelze kann man Reinethylen verwenden. Es wird im Niederdruckkompressor verdichtet und der Polymerisatschmelze im Hochdruckabscheider zugeführt. Das mit den flüchtigen Bestandteilen der Schmelze beladene Ethylen wird über das Hochdruckgassystem und nach Abtrennung der flüchtigen Bestandteile über einen Teilstrom zur Ansaugseite des Hochdruckkompressors und weiter in den Polymerisationsreaktor geleitet.

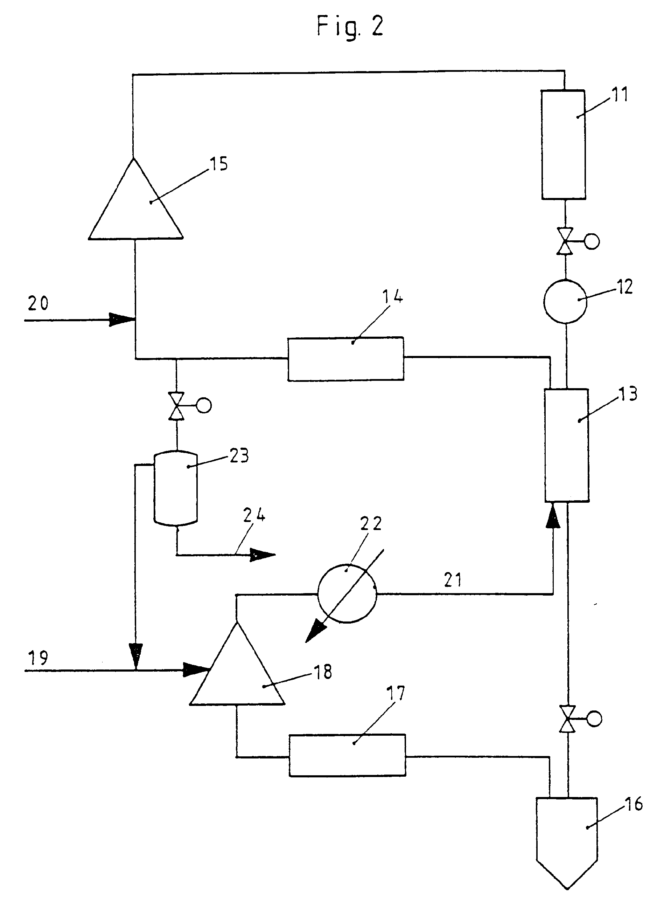

Das erfindungsgemäße Verfahren ist in Figur 2 schematisch dargestellt. Frischethylen aus einer Leitung 19 wird in einem Niederdruckkompressor 18 auf 10 bis 35 MPa verdichtet und in einer Heizvorrichtung 22 auf mindestens 120°C erhitzt und über eine Leitung 21 in einen Hochdruckabscheider 13 geleitet. Dort trifft es auf entgegenströmendes Polymerisat. Mit flüchtigen, niedermolekularen Bestandteilen der Polymerschmelze beladen gelangt das Ethylen in ein Hochdruck-Rückgassystem. Über eine Entspannungsvorrichtung 23 und eine Leitung 24 werden die niedermolekularen Anteile wie Lösungsmittel, Schmieröl und Oligomere abgetrennt. Das gegebenenfalls noch Comonomere, die über eine Leitung 20 ergänzt werden können, enthaltende Ethylen wird einem Hochdruckkompressor 15 und darauf einem Reaktor 11 zugeführt. Die Abscheidung des Polymerisats erfolgt bei 5 bis 70 MPa Druck im Hochdruckabscheider 13, nachdem es, sofoern erforderlich, in einem Kühler 12 gekühlt worden war. Die gasförmigen Anteile gelangen zusammen mit dem im Ggenstrom eingeleiteten Frischethylen in das Hochdruck-Rückgassystem 14. Das Polymerisat wird über einen Niederdruckabscheider 16 und einen Niederdruckkühler 17 entspannt, freigesetzte niedermolekulare Verbindungen werden im Niederdruckkompressor zusammen mit Frischethylen aus Leitung 19 verdichtet.

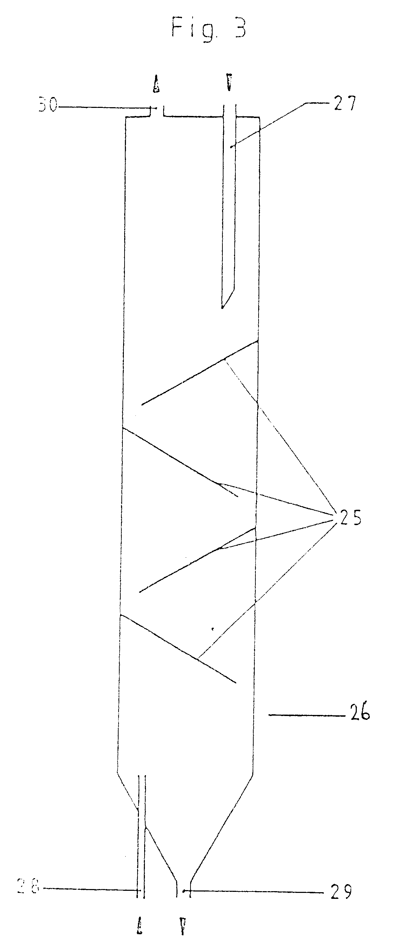

Figur 3 zeigt einen mit Einbauten 25 versehenen Reaktor 26, in dem die Behandlung des Polymerisats mit Ethylen erfolgen kann. Durch eine Leitung 27 wird die Schmelze und durch eine Leitung 28 Ethylen in den Reaktor geleitet. Die Schmelze verläßt den Reaktor über eine Leitung 29 und das mit flüchtigen Anteilen aus der Schmelze beladene Ethylen über eine Leitung 30.

In den folgenden Beispielen wird das neue Verfahren näher erläutert.

### Beispiel 1

In einen Hochdruckabscheider ohne Einbauten wird bei 175°C und 17 MPa ein bei der Polymerisation von 720 Teilen Ethylen und 280 Teilen Vinylacetat erhaltenes Reaktionsgemisch mit einem Anteil von 32,9 Gew.-% Polymerisat eingeleitet. Das Polymerisat wird abgeschieden und kann über ein Bodenventil abgezogen werden. Im Gegenstrom zum Polymerisat werden 250 Teile Ethylen eingeleitet und zusammen mit niedermolekulare Bestandteile der Schmelze über Kopf abgezogen. Das behandelte Polymerisat enthält noch 0,62 Gew.-% monomeres Vinylacetat, die Vinylacetat-Konzentration von Niederdruck-Gaskreislauf beträgt 12,5 Vol.-%.

### Beispiel 2 (Vergleich):

Man arbeitet wie in Beispiel 1, speist das Ethylen jedoch nicht in den Hochdruckabscheider ein, sondern leitet es in bekannter Weise unmittelbar dem Hochdruckverdichter zu.

Das Polymerisat enthält 2 Gew.-% monomeres Vinylacetat, die Vinylacetat-Konzentration im Niederdruck-Gaskreislauf beträgt mehr als 40 Vol.-%.

### Beispiel 3

In einen Hochdruckabscheider mit Einbauten gemäß Figur 3 wird bei 167°C und 15,5 MPa ein bei der Polymerisation von 720 Teilen Ethylen und 280 Teilen Vinylacetat erhaltenes Reaktionsgemisch mit einem Anteil von 33 Gew.-% eingeleitet. Das Polymerisat wird abgeschieden und kann über ein Bodenventil abgezogen werden.

Im Gegenstrom zum Polymerisat werden 260 Teile Ethylen eingeleitet und zusammen mit niedermolekularen Bestandteilen der Schmelze über Kopf abgezogen. Das behandelte Polymerisat enthält 0,33 Gew.-% monomeres Vinylacetat. Die Vinylacetat-Konzentration im Niederdruck-Kreislauf beträgt 4,4 Vol.-%.

### Beispiel 4 (Vergleich)

Man arbeitet wie in Beispiel 3, speist das Ethylen jedoch nicht in den Hochdruckabscheider ein, sondern leitet es in bekannter Weise unmittelbar dem Hochdruckverdichter zu. Das Polymerisat enthält 1,1 Gew.-% Vinylacetat, die Vinylacetat-Konzentration im Niederdruck-Gaskreislauf beträgt 33 Vol.-%.

Die Viskosität der gemäß den Beispielen 1 bis 4 hergestellten Polymerisate ist gleich und beträgt 250 mPa . s bei 140°C.

## Patentansprüche

1. Verfahren zur Abtrennung flüchtiger Bestandteile aus den bei der Homopolymerisation von Ethylen oder der Copolymerisation von Ethylen mit anderen copolymerisierbaren Verbindungen bei erhöhten Drücken und erhöhten Temperaturen anfallenden Polymerisatschmelzen, dadurch gekennzeichnet, daß im Hochdruckpolymerisationsabscheider der Hochdruckpolymerisationsanlage nach Entfernung des Hauptanteils des nichtumgesetzten Gasgemisches durch Herabsetzung des Druckes auf 5 bis 70, vorzugsweise 10 bis 40 MPa durch die Polymerisatschmelze bei einer Temperatur in der Schmelze von mindestens etwa 120°C im Gegenstrom Ethylen zugeleitet wird.

2. Verfahren nach Anspruch 1, dadurch gekennzeichnet, daß die Behandlung der Schmelze mit Ethylen unter einem Druck von 10 bis 40 MPa erfolgt.

3. Verfahren nach Anspruch 1 oder 2, dadurch gekennzeichnet, daß die Behandlung der Schmelze mit Ethylen bei Temperaturen oberhalb etwa 150°C erfolgt.

4. Verfahren nach einem oder mehreren der Ansprüche 1 bis 3, dadurch gekennzeichnet, daß man den zur Behandlung der Schmelze eingesetzten Ethylenstrom im Behandlungsreaktor umlenkt.

5. Verfahren nach einem oder mehreren der Ansprüche 1 bis 4, dadurch gekennzeichnet, daß man je Gewichtsteil Schmelze 0,1 bis 2 Gewichtsteilew Ethylen einsetzt.

## Claims

1. A process for separating volatile constituents out of the polymer melts produced during the homopolymerisation of ethylene or the copolymerisation of ethylene with other copolymerisable compounds at elevated pressures and elevated temperatures, characterised in that in the high-pressure polymerisation separator of the high-pressure polymerisation plant ethylene is fed in countercurrent through the polymerisation melt at a temperature in the melt of not less than approximately 120°C after removal of most of the unreacted gas mixture by reducing the pressure to 5 to 70, preferably 10 to 40 MPa.

2. A process according to claim 1, characterised in that the melt is treated with ethylene at a pressure of 10 to 40 MPa.

3. A process according to claim 1 or 2, characterised in that the melt is treated with ethylene at temperatures above approximately 150°C.

4. A process according to one or more of the claims 1 to 3, characterised in that the ethylene flow used to treat the melt is reversed in the treatment reactor.

5. A process according to one or more of the claims 1 to 4, characterised in that 0.1 to 2 parts by weight of ethylene are used per part by weight of melt.

## Revendications

1. Procédé pour la séparation de constituants volatils des polymères fondus obtenus lors de l'homopolymérisation d'éthylène ou de la copolymérisation d'éthylène avec d'autres composés copolymérisables à hautes pressions et hautes températures, caractérisé en ce qu'on fait passer de l'éthylène à contre-courant à travers le polymère fondu à une température, dans la matière fondue, d'au moins environ 120°C, dans le séparateur de polymérisation à haute pression de l'installation de polymérisation à haute pression, après élimination de la majeure partie du mélange de gaz n'ayant pas réagi par abaissement de la pression jusqu'à une valeur comprise entre 5 et 70, de préférence 10 et 40 MPa.

2. Procédé selon la revendication 1, caractérisé en ce que le traitement de la matière fondue par l'éthylène est effectué sous une pression de 10 à 40 MPa.

3. Procédé selon la revendication 1 ou 2, caractérisé en ce que le traitement de la matière fondue par l'éthylène est effectué à des températures supérieures à environ 150°C.

4. Procédé selon une ou plusieurs des revendications 1 à 3, caractérisé en ce qu'on fait changer la direction du courant d'éthylène utilisé pour le traitement de la matière fondue dans le réacteur de traitement.

5. Procédé selon une ou plusieurs des revendications 1 à 4, caractérisé en ce que, pour chaque partie en poids de matière fondue, on utilise 0,1 à 2 parties en poids d'éthylène.
